(19)

**Europäisches Patentamt**
**European Patent Office**
**Office européen des brevets**

(11) **EP 4 156 633 B1**

(12) **EUROPEAN PATENT SPECIFICATION**

(45) Date of publication and mention
of the grant of the patent:
**09.04.2025 Bulletin 2025/15**

(21) Application number: **22197084.1**

(22) Date of filing: **22.09.2022**

(51) International Patent Classification (IPC):
$H04L\ 43/045^{(2022.01)}$    $H04L\ 43/04^{(2022.01)}$
$H04L\ 43/0829^{(2022.01)}$    $H04L\ 43/0882^{(2022.01)}$
$H04L\ 43/16^{(2022.01)}$    $H04L\ 41/142^{(2022.01)}$

(52) Cooperative Patent Classification (CPC):
**H04L 43/0829; H04L 41/142; H04L 43/0882;**
**H04L 43/16;** H04L 43/04; H04L 43/045;
H04L 43/0835; H04L 43/0841

(54) **PACKET LOSS BASED REAL-TIME NETWORK PATH HEALTH SCORING**

AUF PAKETVERLUST BASIERENDE ECHTZEIT-BEWERTUNG DER
NETZWERKPFADGESUNDHEIT

ÉVALUATION DE SANTÉ DE CHEMIN DE RÉSEAU EN TEMPS RÉEL BASÉE SUR LA PERTE DE
PAQUETS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.09.2021 US 202163261571 P**
**11.07.2022 US 202217811620**

(43) Date of publication of application:
**29.03.2023 Bulletin 2023/13**

(73) Proprietor: **Palo Alto Networks, Inc.**
**Santa Clara, CA 95054 (US)**

(72) Inventor: **Reddy, Gopal Gadekal**
**Santa Clara, 95054 (US)**

(74) Representative: **Arnold & Siedsma**
**Bezuidenhoutseweg 57**
**2594 AC The Hague (NL)**

(56) References cited:
**EP-A1- 2 033 366**    **EP-A2- 1 811 683**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

BACKGROUND

The disclosure generally relates to electronic communication techniques (e.g., CPC class H04) and arrangements for maintenance of administration of packet switching networks (e.g., CPC subclass H04L 41/00).

The terms wide area network (WAN) and local area network (LAN) identify communications networks of different geographic scope. For a LAN, the geographic area can range from a residence or office to a university campus. For a WAN, the geographic area can be defined with respect to a LAN - greater than the area of a LAN. In the context of telecommunications, a circuit refers to a discrete path that carries a signal through a network between two remote locations. A circuit through a WAN can be a physical circuit or a virtual/logical circuit. A physical WAN circuit refers to a fixed, physical path through a network. A dedicated or leased line arrangement uses a physical WAN circuit. A logical WAN circuit refers to a path between endpoints that appears fixed but is one of multiple paths through the WAN that can be arranged. A logical circuit is typically implemented according to a datalink and/or network layer protocol, although a transport layer protocol (e.g., transmission control protocol (TCP)) can support a logical circuit.

The Software-defined Network (SDN) paradigm decouples a network management control plane from the data plane. A SDN controller that implements the control plane imposes rules on switches and routers (physical or virtual) that handle Internet Protocol (IP) packet forwarding in the data plane. The limitations of managing traffic traversing a WAN invited application of the SDN paradigm in WANs.

EP 1 811 683 A2 discloses a communication system that allocates uplink transmit power to a user equipment based on a fractional power control scheme and on a path loss threshold. In another embodiment, since the cell-edge users are also likely to be power limited, the communication system may implement a minimized uplink transmission bandwidth resource allocation scheme that may work with the fractional power control scheme to achieve a level of performance desired for uplink transmissions in 3GPP and 3GPP2 Evolution communication systems.

BRIEF DESCRIPTION OF THE DRAWINGS

Embodiments of the disclosure may be better understood by referencing the accompanying drawings.

Figure 1 depicts a diagram of a network appliance scoring a network circuit of a software-defined wide area network in nearly real-time based on packet loss and a good behavior benchmark.

Figure 2 is a table of example good behavior benchmarks defined across circuit load buckets.

Figure 3 is a visual representation of the health of a circuit A in terms of smoothed NRT scores and NRT scores.

Figure 4 is a visual representation of the health of a circuit B in terms of smoothed NRT scores and NRT scores.

Figure 5 is a flowchart of example operations for determining a nearly real-time score for a network circuit based on packet loss data.

Figure 6 depicts an example computer system with a NRT packet loss based score calculator.

DESCRIPTION

The description that follows includes example systems, methods, techniques, and program flows that embody aspects of the disclosure. However, it is understood that this disclosure may be practiced without these specific details. For instance, this disclosure refers to scoring a path based on circuit data in illustrative examples. Data used for scoring a path will depend upon configuration of the measuring network devices. Aspects of this disclosure can also be applied to tunnels provisioned on a circuit. In other instances, well-known instruction instances, protocols, structures and techniques have not been shown in detail in order not to obfuscate the description. Generally, the method described relates to a computer-implemented method.

<u>Overview</u>

A network path scoring system is disclosed herein that scores "health" of network paths in terms of packet loss. The system scores health of a network path based on packet loss of the network path, bandwidth capacity ("bandwidth") of a corresponding SD-WAN circuit ("network circuit" or "circuit"), and bandwidth utilization ("load") of the circuit. The scoring is done for the ingress and egress packet loss and occurs in nearly real-time to aid with detection of network problems, including transient or ephemeral problems which can impact application performance and possibly violate a service level agreement.

The scoring uses a "dynamic packet loss threshold" that is based on benchmarks of "good" packet loss behavior of network paths associated with circuits of different bandwidths and recent behavior of the path being scored. The observations for good packet loss behavior are bucketized by corresponding circuit load. For the path being scored, observations are also bucketized and aggregated into a moving average per load bucket. The moving averages represent recent behavior of the path by load bucket. The scoring system scores a path as a function of the current time interval packet loss of the network path being scored and the dynamic packet loss threshold of the current time interval. The dynamic packet loss threshold of the current time interval is a function of a good packet loss benchmark and the packet loss moving average for the load of the current time interval.

Example Illustrations

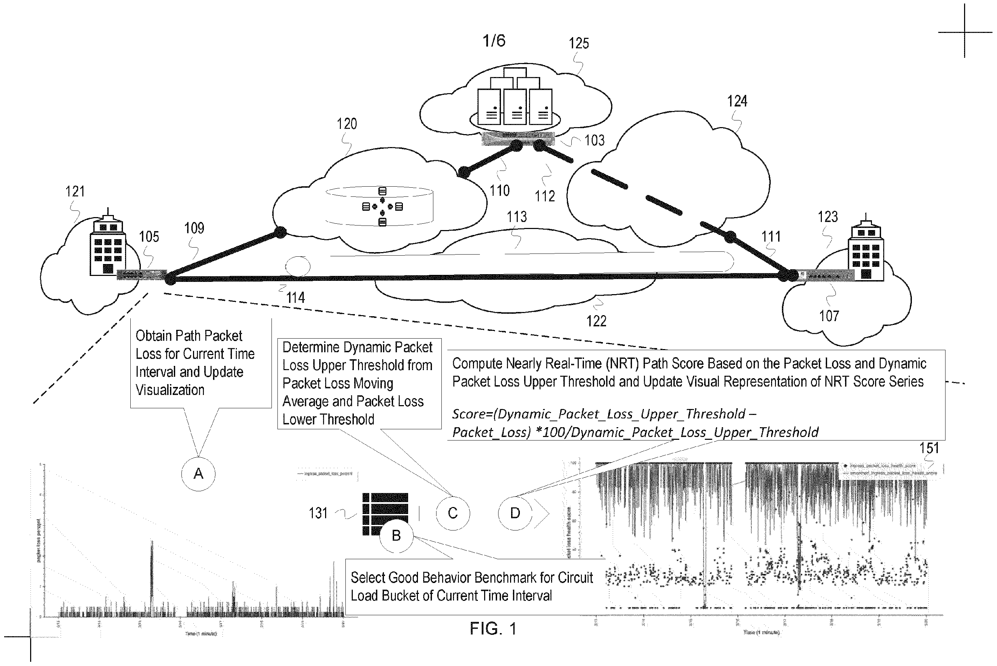

Figure 1 depicts a diagram of a network appliance scoring a network path of a software-defined wide area network in nearly real-time based on network path packet loss and a good packet loss behavior benchmark. A network path may traverse circuits between customer edge devices at different sites and provider edge devices and a multi-protocol label switching underlay of a provider(s) or even different underlays of different providers. A network path may be a tunnel provisioned between the endpoints. A network path may be a point-to-point or point-to-multi-point circuit between sites. Regardless of the particular nodes and infrastructure being traversed, the communication quality of the network path is measured based on probes transmitted between the endpoints. Bandwidth utilization is determined with respect to bandwidth capacity as defined at the endpoint devices. Despite the myriad incarnations of a network path, the bandwidth capacity is typically expressed as a setting or configuration of a circuit corresponding to a network path. Due to the multitude of connection options, layouts/configurations (e.g., overlay, underlay, etc.), and technologies in network communications, this example illustration illustrates a single, relatively simple scenario that includes three customer edge devices 103, 105, 107. The edge device 103 is at a data center hosted on a network 125, which may be on-premise or off-premise data center. The edge device 105 is at a branch office network 121 and the edge device 107 is at a branch office network 123. The edge device 105 is communicatively coupled with the edge device 103 via a network path that traverses a network 120 that provides a multi-protocol label switching service. The edge device 105 connects to the network 120 via a circuit 109 and the edge device 103 connects to the network 120 via a circuit 110. The edge device 105 is communicatively coupled with the edge device 107 via a network path 113 (illustrated as a tunnel) provisioned on a circuit 114 which traverses a private WAN 122. The edge device 103 is communicatively coupled with the edge device 107 via a network path which traverses a public WAN 124 along a direct internet connection 112. The edge device 107 connects to the public WAN 124 via a circuit 111. The network paths form part of an overlay (e.g., a secure network fabric or virtual private network (VPN)) that securely interconnects geographically disparate sites/networks of an organization.

Figure 1 is annotated with a series of letters A - D which represent operational stages of the scoring system. Although these stages are ordered for this example, the stages illustrate one example to aid in understanding this disclosure and should not be used to limit the claims. Subject matter falling within the scope of the claims can vary with respect to the order and some of the operations. In addition, each stage can involve one operation or multiple operations.

At stage A, the edge device 105 obtains packet loss data of a network path for a current time interval. A "current" time interval refers to a time interval that has most recently elapsed. A NRT scoring system can be implemented as a network appliance with a hardware or software form factor. In Figure 1, the edge device 105 implements the NRT circuit scoring system. The edge devices 103, 105, 107 or another system(s) in communication with the edge devices send probes per network path at a time interval smaller than a time interval that will be used to score the network paths (e.g., sending probes at sub-second time intervals for minute granularity scoring). The edge device 105 may obtain the packet loss data directly (e.g., compute packet loss based on the probe measurements over the scoring time interval), access the percent packet loss for the scoring time interval from a data structure, interact with another process that computes the packet loss from the probes, etc. The edge device 105 updates a visualization of time-series percent packet loss for the network path ("path") with the packet loss data. To score the network path defined by the edge device 105, 103 as path endpoints, the edge device obtains packet loss data based on probes transmitted between the edge devices 105, 103.

At stage B, the edge device 105 selects a good behavior benchmark for a circuit load bucket of the current time interval from a benchmark table 131. The benchmark table 131 is a structure that associates defined good behavior benchmarks with buckets of circuit bandwidth utilization ("circuit load"). The edge device 105 computes or retrieves the circuit load over the time interval. Circuit load is determined based on the circuit capacity, which is defined/configured, and amount of received data over the time interval for scoring based on ingress circuit data. For egress scoring, the circuit load will be based on amount of transmitted data. The time granularity for determining circuit load aligns with the scoring time interval. Use of circuit load as a percent of capacity allows scoring to be agnostic with respect to circuit capacity, which allows the scoring to be with respect to the good behavior benchmark. Assuming the network path being scored is the network path 113, then the scoring system would determine ingress load for the circuit 114 for ingress scoring and egress load for the circuit 114 for egress scoring. The packet loss data would be based on probes transmitted between the path endpoints 105, 107.

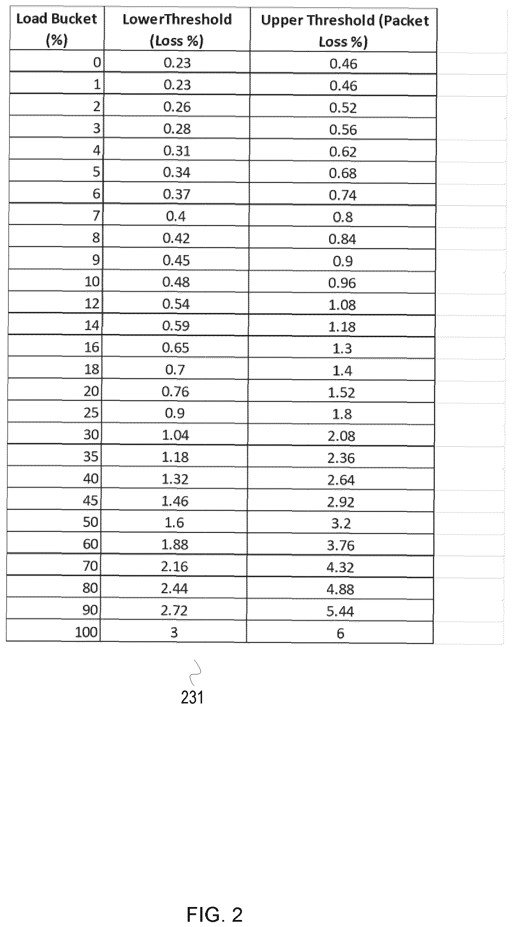

Figure 2 is a table of example good behavior benchmarks defined across circuit load buckets. Packet loss data for numerous network paths corresponding to circuits of varying capacities are analyzed. This analysis correlates packet loss across circuits of different capacity by circuit loads. Experts and/or people with relevant domain knowledge identify packet loss percentages across the different loads of circuits corresponding to network paths considered as having good performance. As an example, packet loss data can be evaluated for "good" network paths and, for each circuit load bucket, percent packet loss at the 90th percentile (for example) of the packet loss data across the good network paths is chosen as an upper threshold for packet loss. This will eliminate the worst 10% of packet loss from consideration, effectively filtering it out as noise. A table 231 of Figure 2 includes 3 columns from left to right: Load Bucket (%), Lower Threshold, and Upper Thresholds. Each load bucket is associated with lower and upper thresholds . The lower threshold is a fraction of the upper threshold (or the upper threshold is a multiple of the lower threshold). Expert knowledge and/or experience (and possibly user preference) configure the fraction (or multiple) to be applied for setting the lower threshold with respect to the upper threshold. In this illustration, the lower threshold is half the upper threshold. The load buckets in table 201 progress in 1% increments from 0% to 10%, then in 2% increments to 20%, 5% increments to 50%, and finally in 10% increments to the 100% load bucket. A few entries from table 231 will be described. At the 0% and 1% load buckets, the lower threshold for packet loss is 0.23% and the upper threshold for packet loss is 0.46%. At 25% load, the lower threshold for packet loss is 0.9% and the upper threshold is 1.8%. At 100% load, the lower threshold is defined as 3% and the upper threshold is defined as 6%. Implementations can vary the bucket sizes and progression from that illustrated. Embodiments do not necessarily maintain both the upper and lower thresholds since the coefficient that relates them is specified and can be used to compute the other. In addition, embodiments can choose the lower thresholds based on the percentiles of packet loss of the good network paths. For example, the lower thresholds can be defined as the 10th percentile of packet loss of the good paths across the different loads.

Returning to Figure 1, the edge device 105 determines a dynamic packet loss upper threshold at stage C. The edge device 105 calculates the dynamic packet loss upper threshold as a sum of the lower threshold defined for the load of the current interval and the packet loss moving average as updated for the current time interval. The edge device 105 maintains a packet loss moving average over time. The dynamic upper threshold is "dynamic" because it adjusts to the dynamic behavior of a network path as represented by the moving average. However, the dynamic upper threshold is capped at the upper threshold. If the dynamic upper threshold exceeds the upper threshold, then the dynamic upper threshold is replaced with the upper threshold. Assuming the current time interval has a load corresponding to the 45% load bucket and the thresholds table 231 of Figure 2 is being used, the edge device 105 computes the dynamic packet loss upper threshold as a sum of the moving average and 1.46%. Table 1 below provides example dynamic packet loss upper thresholds for different example packet loss moving averages.

Table 1: Example Dynamic Packet Loss Upper Thresholds at Same Load for Different Packet Loss Moving Averages

| Example Packet Loss Moving Average | Packet Loss Lower Threshold | Dynamic Packet Loss Upper Threshold |
|---|---|---|
| 0.7 | 1.46 | 2.16 |
| 1.4 | 1.46 | 2.86 |
| 3.0 | 1.46 | 2.92 |

As shown above, the dynamic packet loss upper threshold when the moving average is 3.0% is capped at the upper threshold of 2.92% when the load is 45%. Embodiments can compute the dynamic packet loss upper threshold differently with the constraints that the dynamic upper threshold not exceed the upper threshold and not fall below the lower threshold and that the dynamic upper threshold capture the dynamic behavior of the network path being scored. As an example, the dynamic packet loss upper threshold can be computed as a sum of the lower threshold defined for the current load and a square of the moving average. This is expressed as

$$dynamic\_upper\_threshold = lower\_threshold + (moving\_average * moving\_average)$$

At stage D, the edge device 105 computes a NRT network path score based on the packet loss of the current time interval and the dynamic packet loss upper threshold. The edge device 105 computes the NRT score according to the expression:

$$NRT\ Score = (Dynamic\_Packet\_Loss\_Upper\_Threshold - Packet\_Loss)$$
$$*100/Dynamic\_Packet\_Loss\_Upper\_Threshold$$

Table 2 below indicates the scores that would result from the example dynamic packet loss upper thresholds in Table 1.

Table 2: Example Nearly Real-Time Circuit Scores

| Dynamic Packet Loss Upper Threshold | Packet Loss | NRT Path Score |
|---|---|---|
| 2.16 | 0.8 | 62.9 |
| 2.86 | 1.1 | 61.5 |
| 2.92 | 3.3 | -13.0 |

The scoring is on a scale of 0 - 100 with allowance for negative scores depending upon implementation. As shown above in Table 2, the NRT circuit scores get worse with the increasing packet loss at the 45% load.

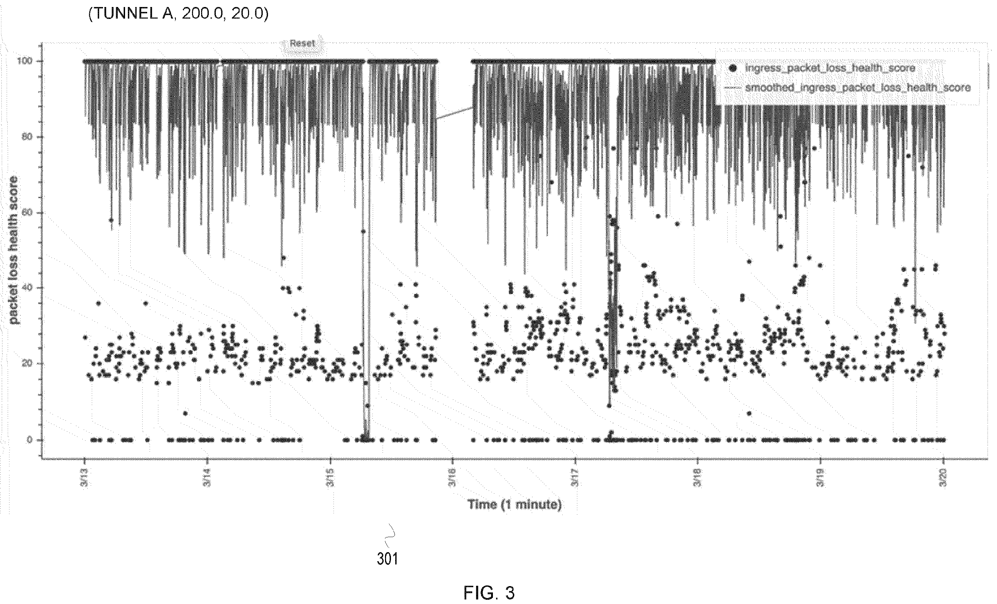

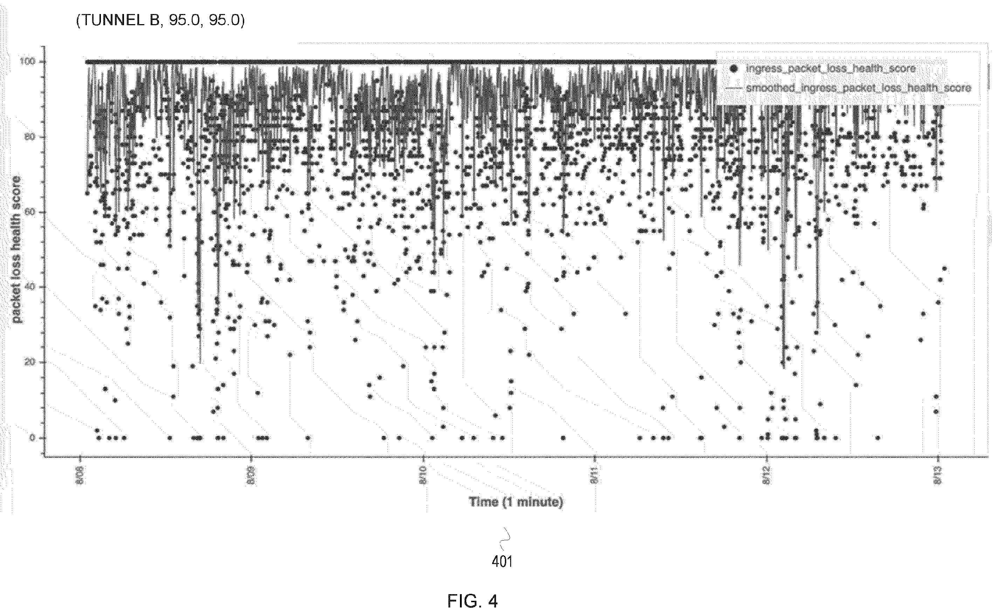

The edge device 105 can then update a visual representation 151 of a NRT score series with the path score for the current time interval. The circuit score visual representation 151 depicts, at each scored time, a smoothed NRT score as a descending line with the NRT score as a dot. The smoothed score smooths out dips and identifies intervals with sustained low scores. Figures 3 and 4 are example visual representations of the NRT packet loss based circuit scoring.

Figure 3 is a visual representation of the health of a tunnel A in terms of smoothed NRT scores and NRT scores. A visualization or graph 301 charts the NRT scores and smoothed NRT scores tunnel A based on ingress packet loss. The tunnel corresponds to a circuit having 200 megabits/second (mbps) download/downstream bandwidth and 20 mbps upload/upstream bandwidth. The graph 301 includes scoring per minute over a 7 day period from March 13 to March 20. With the graph 301, a performance impacting issue was indicated on March 15 that yielded NRT scores of 0. These low scores would have triggered an alarm or notification to facilitate investigation of the transient issue. Another condition or state occurs on March 17. On March 17th, the moving average score didn't fall to 0 which indicates that there were enough samples greater than 0 interleaved with samples at 0 to pull up the moving average score. This is in contrast to March 15 where the samples were almost continuously close to 0 and the moving average score held close to 0. Depending on the thresholds defined for alerts, the March 17th incident may not raise an alert but the March 15th incident will raise an alert.

Figure 4 is a visual representation of the health of a tunnel B in terms of smoothed NRT scores and NRT scores. A visualization or graph 401 charts the NRT scores and smoothed NRT scores for the tunnel B based on ingress packet loss data. The tunnel B corresponds to a circuit having 95 mbps download bandwidth and 95 mbps upload bandwidth. The graph 401 includes scoring per minute over a 7 day period from August 8 to August 13. While there was packet loss experienced on tunnel B, the scores reflect that the packet loss fell within an expected range for the tunnel.

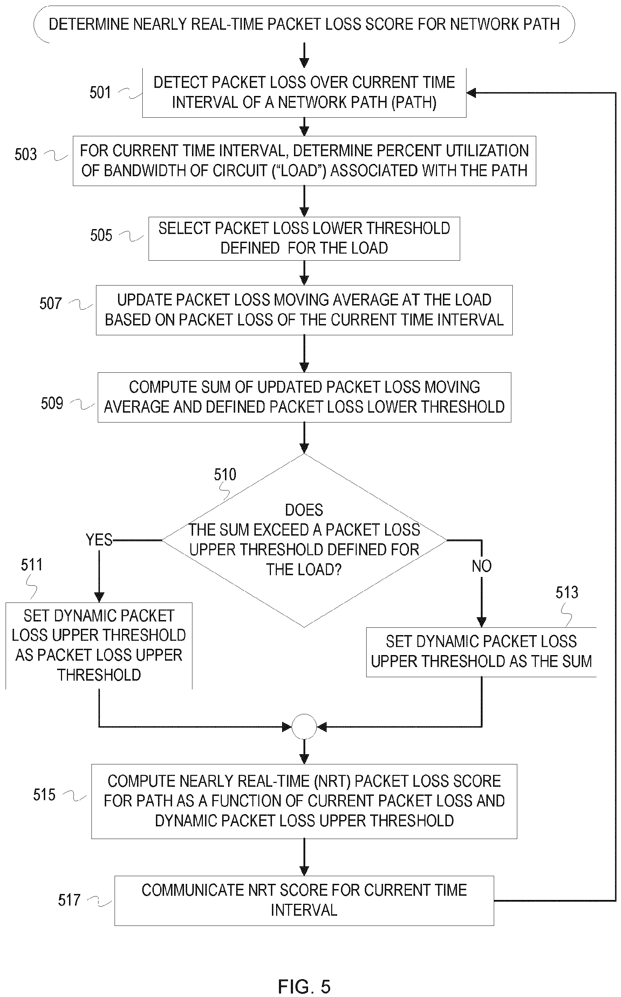

Figure 5 is a flowchart of example operations for determining a nearly real-time score for a network path based on packet loss data. The scoring is nearly real-time due to the delay that occurs between an event (elapse of a time interval) and both determining and using (e.g., display, feedback, and/or control) a NRT path score. The operations are presumed to be ongoing since the scoring can be used to identify transient/ephemeral issues that can repeat and impact performance of applications. The example operations are described with reference to a scoring system for consistency with Figure 1. The name chosen for the program code is not to be limiting on the claims. Structure and organization of a program can vary due to platform, programmer/architect preferences, programming language, etc. In addition, names of code units (programs, modules, methods, functions, etc.) can vary for the same reasons and can be arbitrary.

At block 501, a scoring system detects packet loss for a current time interval for a network path. The scoring system can detect the packet loss for the current time interval by various means depending upon the monitoring infrastructure and application organization. A process or thread of the scoring system can detect that packet loss for a time interval is written to a monitored location or receive the percent packet loss over the time interval as calculated by another entity (e.g., program, process, etc.) collecting packet loss data and calculating statistical information. At time interval elapse, the scoring system can query a repository or application for the percent packet loss of the last minute or at a specified time for an identified path.

At block 503, the scoring system determines a percent utilization of circuit bandwidth ("load") of a circuit corresponding to the network path for the current time interval. As with the percent packet loss for a time interval, the scoring system can interact or query another system or application to obtain the current load on the circuit. Implementations of the scoring system may include functionality for computing load on the circuit for the currently elapsed time interval.

At block 505, the scoring system selects a packet loss lower threshold defined for the determined load. The scoring system accesses a structure that associates circuit load buckets with defined packet loss lower thresholds. The structure is not unique to the network path being scored and has been determined based on observations of packet loss of numerous network paths with good application performance. The scoring system will identify a circuit load bucket of the structure that encompasses the determined circuit load and select the packet loss lower threshold defined for the circuit load bucket.

At block 507, the scoring system updates a packet loss moving average for the determined load based on the packet loss of the current time interval. As previously discussed, the scoring system maintains a packet loss moving average for each circuit load bucket indicated in the benchmark structure. The scoring system reads the packet loss moving average of the bucket corresponding to the current circuit load and updates the moving average to incorporate current packet loss (i.e., packet loss of the most recently elapsed time interval). The moving average may be a weighted or smoothed moving average, for example an exponential moving average with a defined *alpha* (e.g., 0 - 0.3, exclusive of 0).

At block 509, the scoring system computes a sum of the updated packet loss moving average and the packet loss lower threshold. The packet loss lower threshold was selected based on the current circuit load (505).

At block 510, the scoring system determines whether the computed sum exceeds a packet loss upper threshold defined for the load bucket. The scoring system can retrieve the packet loss upper threshold defined for the bucket of the current circuit load from the benchmark structure. The scoring system can instead use the coefficient that relates the upper and lower thresholds to determine the packet loss upper threshold. If the sum exceeds the packet loss upper threshold, then operational flow continues to block 511. If the sum does not exceed the packet loss upper threshold, then operational flow continues to block 513.

At block 511, the scoring system sets the dynamic packet loss upper threshold as the packet loss upper threshold. The scoring system uses the packet loss upper threshold as a cap to reduce the impact of packet loss that can be considered noise or extreme deviations. Operational flow continues to block 515.

At block 513, the scoring system sets the dynamic packet loss upper threshold as the computed sum of the updated packet loss moving average and the packet loss lower threshold. This allows the circuit to be scored based on a range of acceptable packet loss below an upper threshold that accounts for recent behavior of the network path as represented by the moving average. Operational flow continues to block 515.

At block 515, the scoring system computes a NRT packet loss score for the network path based on the current packet loss and the dynamic packet loss upper threshold. The score corresponds to where current packet loss for the network path falls within a range of acceptable packet loss defined from 0 to the dynamic upper threshold. The expression used in Figure 1 is one example for computing the score using a linear relationship between packet loss and the score. Embodiments can compute score based on a non-linear relationship.

Embodiments can compare each score against a configurable threshold for alarm or notification. For example, a threshold can be defined at 20. If a score falls below the threshold (or is less than or equal to the threshold), then a notification can be generated (e.g., text message sent, graphical display updated with an indication of a low score, etc.) and/or an alarm triggered. Different thresholds can be set for different levels of urgency.

While the above examples refer to scoring a network path with ingress packet loss data, a network path score can be based on one of the egress and ingress scores (e.g., the lowest of the two scores) or based on both the ingress and egress scores (e.g., a sum of the scores). Accordingly, the example operations of Figure 5 would be run/executed with ingress packet loss and the corresponding downstream load and with egress packet loss and the corresponding upstream load. Combining or aggregating the ingress and egress scores may be summing with the use of a 0-200 scale, for example, averaging the scores, etc.

The flowcharts are provided to aid in understanding the illustrations and are not to be used to limit scope of the claims. The flowcharts depict example operations that can vary within the scope of the claims. Additional operations may be performed; fewer operations may be performed; the operations may be performed in parallel; and the operations may be performed in a different order. For example, the operations depicted in Figure 5 can cap the moving average instead of the sum of the moving average and the lower threshold. Assuming the lower threshold is half of the upper threshold, the moving average can be capped by the lower threshold and added to the lower threshold. This prevents the sum from exceeding the upper threshold. It will be understood that each block of the flowchart illustrations and/or block diagrams, and combinations of blocks in the flowchart illustrations and/or block diagrams, can be implemented by program code. The program code may be provided to a processor of a general purpose computer, special purpose computer, or other programmable machine or apparatus.

As will be appreciated, aspects of the disclosure may be embodied as a system, method or program code/instructions stored in one or more machine-readable media. Accordingly, aspects may take the form of hardware, software (including firmware, resident software, micro-code, etc.), or a combination of software and hardware aspects that may all generally be referred to herein as a "circuit," "module" or "system." The functionality presented as individual modules/units in the example illustrations can be organized differently in accordance with any one of platform (operating system and/or hardware), application ecosystem, interfaces, programmer preferences, programming language, administrator preferences, etc.

Any combination of one or more machine readable medium(s) may be utilized. The machine readable medium may be a machine readable signal medium or a machine readable storage medium. A machine readable storage medium may be, for example, but not limited to, a system, apparatus, or device, that employs any one of or combination of electronic, magnetic, optical, electromagnetic, infrared, or semiconductor technology to store program code. More specific examples (a non-exhaustive list) of the machine readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a machine readable storage medium may be any tangible medium that can contain, or store a program for use by or in connection with an instruction execution system, apparatus, or device. A machine readable storage medium is not a machine readable signal medium.

A machine readable signal medium may include a propagated data signal with machine readable program code embodied therein, for example, in baseband or as part of a carrier wave. Such a propagated signal may take any of a variety of forms, including, but not limited to, electro-magnetic, optical, or any suitable combination thereof. A machine readable signal medium may be any machine readable medium that is not a machine readable storage medium and that can communicate, propagate, or transport a program for use by or in connection with an instruction execution system, apparatus, or device.

Program code embodied on a machine readable medium may be transmitted using any appropriate medium, including but not limited to wireless, wireline, optical fiber cable, RF, etc., or any suitable combination of the foregoing.

The program code/instructions may also be stored in a machine readable medium that can direct a machine to function in a particular manner, such that the instructions stored in the machine readable medium produce an article of manufacture including instructions which implement the function/act specified in the flowchart and/or block diagram block or blocks.

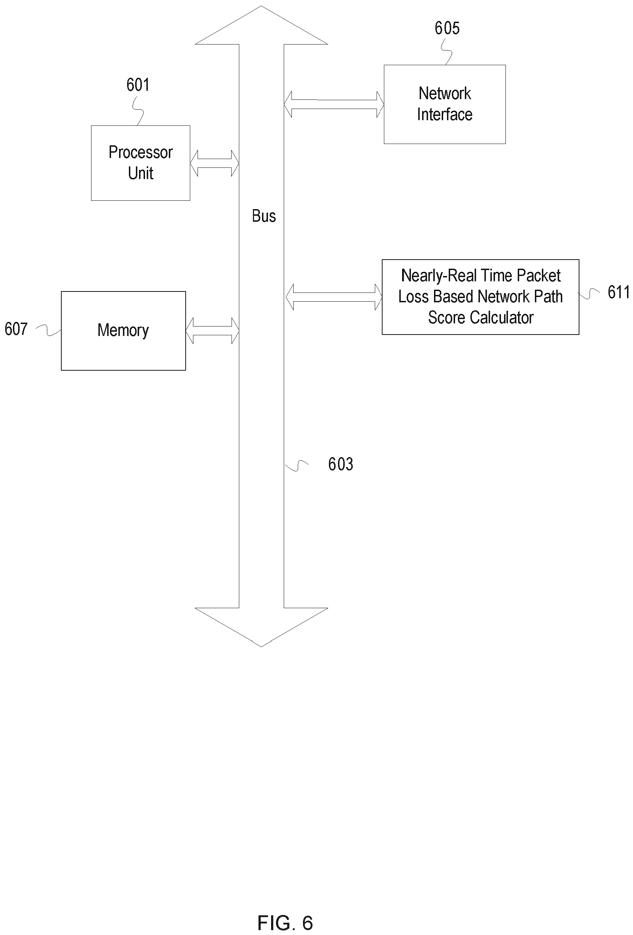

Figure 6 depicts an example computer system with a NRT packet loss based score calculator. The computer system includes a processor 601 (possibly including multiple processors, multiple cores, multiple nodes, and/or implementing multi-threading, etc.). The computer system includes memory 607. The memory 607 may be system memory or any one or more of the above already described possible realizations of machine-readable media. The computer system also includes a bus 603 and a network interface 605. The system also includes a NRT packet loss based score calculator 611. The NRT packet loss based score calculator 611 scores ingress/egress packet loss based health of a network path at regular time intervals. The NRT packet loss based score calculator 611 determines a range of acceptable packet loss for the path based on a dynamic upper threshold (the moving average of the path and a lower threshold for the current circuit load or an upper threshold for the circuit load). The NRT packet loss based score calculator 611 scores the path as a function of the current packet loss relative to the dynamic upper threshold. Any one of the previously described functionalities may be partially (or entirely) implemented in hardware and/or on the processor 601. For example, the functionality may be implemented with an application specific integrated circuit, in logic implemented in the processor 601, in a co-processor on a peripheral device or card, etc. Further, realizations may include fewer or additional components not illustrated in Figure 6 (e.g., video cards, audio cards, additional network interfaces, peripheral devices, etc.). The processor 601 and the network interface 605 are coupled to the bus 603. Although illustrated as being coupled to the bus 603, the memory 607 may be coupled to the processor 601.

Plural instances may be provided for components, operations or structures described herein as a single instance. Finally, boundaries between various components, operations and data stores are somewhat arbitrary, and particular operations are illustrated in the context of specific illustrative configurations. In general, structures and functionality presented as separate components in the example configurations may be implemented as a combined structure or component. Similarly, structures and functionality presented as a single component may be implemented as separate components.

Terminology

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

**Claims**

1. A method for detecting network problems comprising:

   determining (501) first packet loss over a first time interval for a first network path;
   **characterized by** further comprising:

      determining (503) a percent utilization of a bandwidth corresponding to the first network path over the first time interval;
      based on the first packet loss over the first time interval for the first network path, updating (507) a packet loss moving average for a first bandwidth utilization bucket that corresponds to the percent bandwidth utilization of the first time interval;
      selecting (505) a packet loss lower threshold defined for the first bandwidth utilization bucket;

determining (509) a first packet loss upper threshold based, at least in part, on the updated packet loss moving average and the defined packet loss lower threshold; and
scoring (515) the first network path based, at least in part, on the first packet loss over the first time interval for the first network path and the first packet loss upper threshold.

2. The method of claim 1, wherein scoring (515) the first network path comprises determining a difference between the first packet loss upper threshold and the first packet loss over the first time interval for the first network path and a quotient of the difference and of the first packet loss upper threshold.

3. The method of claim 1 or 2, further comprising updating a series of scores of the first network path across sequential time intervals with an indication of a current packet loss score for the first network path, wherein scoring the first network path generates the current packet loss score and the first time interval is a most recently elapsed time interval with respect to the sequential time intervals, in particular wherein the method further comprises graphically presenting the series of scores.

4. The method of any of the preceding claims, wherein packet loss lower thresholds are defined (505) for a plurality of bandwidth utilization buckets based on observations of a plurality of network paths having good performance as represented by packet loss across a plurality of bandwidth utilizations corresponding to the plurality of bandwidth utilization buckets, wherein the packet loss lower thresholds include the defined packet loss lower threshold, in particular wherein the plurality of network paths correspond to circuits having different bandwidths.

5. The method of any of the preceding claims, wherein the packet loss moving average is a smoothed or weighted packet loss moving average.

6. The method of any of the preceding claims, further comprising:
capping (511) the first packet loss upper threshold to a second packet loss upper threshold defined for the first bandwidth utilization bucket.

7. The method of any of the preceding claims, further comprising:

determining second packet loss over the first time interval for the first network path;
determining a percent utilization of a second bandwidth of the first network path over the first time interval;
based on the second packet loss over the first time interval for the first network path, updating a packet loss moving average for a second bandwidth utilization bucket that corresponds to the percent utilization of the second bandwidth of the first network path;
selecting a second packet loss lower threshold defined for the second bandwidth utilization bucket;
determining a second packet loss upper threshold based, at least in part, on the updated packet loss moving average for the second bandwidth utilization bucket and the second defined packet loss lower threshold; and
wherein scoring the first network path is also based on the second packet loss over the first time interval for the first network path and the second packet loss upper threshold, wherein the first packet loss is ingress packet loss and the second packet loss is egress packet loss.

8. A non-transitory, machine-readable medium (607) having program code stored thereon, for detecting network problems, **characterized in that** the program code comprises instructions which, when executed by a processor (601), cause the processor (601) to:

for each of a plurality of percent bandwidth utilization buckets for a network path, maintain (507) a packet loss moving average based on time-series packet loss data for respective percent bandwidth utilization of the network path; and
corresponding to each lapse of a time interval, score (515) the network path for the current time interval based, at least in part, on the packet loss for the network path over the current time interval and a first packet loss upper threshold, wherein the first packet loss upper threshold is based, at least in part, on the packet loss moving average for a first of the plurality of percent bandwidth utilization buckets that corresponds to the percent bandwidth utilization of the network path in the current time interval and a packet loss lower threshold defined for the first percent bandwidth utilization bucket.

9. The machine-readable medium of claim 8, wherein the current time interval is a most recently elapsed time interval.

10. The machine-readable medium of claim 8 or 9, wherein the program code further comprises instructions to cap (511) the first packet loss upper threshold to a second packet loss upper threshold that is defined for the first percent bandwidth utilization bucket, wherein prior to capping the first packet loss upper threshold is a sum (509) of the packet loss moving average and a packet loss lower threshold defined for the first percent bandwidth utilization bucket, wherein the defined packet loss thresholds are determined (505) from packet loss observations of multiple network paths at percent bandwidth utilizations within the first percent bandwidth utilization bucket and wherein the multiple network paths are characterized as having good performance in terms of packet loss.

11. The machine-readable medium of any of claims 8 to 10, wherein the instructions to score (515) the network path comprise instructions to determine the score as a function of the packet loss of the current time interval and the first packet loss upper threshold.

12. The machine-readable medium of any of claims 8 to 11, wherein the program code further comprises instructions to aggregate (509) the updated packet loss moving average with the packet loss lower threshold defined for the first percent bandwidth utilization bucket to determine the first packet loss upper threshold, in particular wherein the packet loss is either ingress packet loss or egress packet loss.

13. An apparatus for detecting network problems comprising:

   a processor (601); and
   a computer-readable medium (607) **characterized by** having instructions stored thereon that are executable by the processor (601) to cause the apparatus to,
   for each of a plurality of percent bandwidth utilization buckets, maintain (507) a packet loss moving average of a network path based on time-series packet loss data for the network path, wherein the instructions to maintain the packet loss moving average for each percent bandwidth utilization bucket comprise instructions to update (507), with packet loss of the network path over a current time interval, the packet loss moving average of the one of the plurality of percent bandwidth utilization buckets that corresponds to percent bandwidth utilization of the network path for the current time interval; and
   for the current time interval,

      determine (515) a range of acceptable packet loss for the percent bandwidth utilization bucket that corresponds to the percent bandwidth utilization of the network path for the current time interval, wherein the instructions to determine (515) the range of acceptable packet loss for the percent bandwidth utilization bucket comprise instructions to determine (509) a first packet loss upper threshold that is based, at least in part, on the packet loss moving average for the current time interval and a packet loss lower threshold defined for the percent bandwidth utilization bucket corresponding to the current time interval; and
      score (515) the network path based, at least in part, on the packet loss for the network path over the current time interval and the range of acceptable packet loss.

14. The apparatus of claim 13, wherein a packet loss lower threshold is defined (505) for each of the plurality of percent bandwidth utilization buckets based, at least in part, on the observations of the plurality of network paths with various bandwidths and wherein the observations are across percent bandwidth utilizations.

15. The apparatus of claim 13 or 14, wherein the instructions to score (515) the network path comprise instructions to determine an ingress score as a function of the packet loss over the current time interval and the acceptable range of packet loss and to determine an egress score based on egress packet loss data over the current time interval, wherein the packet loss is ingress packet loss,
   and/or

      wherein the instructions to determine (509) the first packet loss upper threshold comprise instructions to sum (509) the packet loss moving average and the packet loss lower threshold and to cap (511) the sum at a second packet loss upper threshold defined for the percent bandwidth utilization bucket that corresponds to the percent bandwidth utilization of the network path for the current time interval, and/or
      wherein the computer-readable medium (607) further comprises instructions to update a series of scores for the network path with the score for the current time interval.

**Patentansprüche**

1. Verfahren zum Erkennen von Netzwerkproblemen, umfassend:

   Bestimmen (501) eines ersten Paketverlusts über ein erstes Zeitintervall für einen ersten Netzwerkpfad; **gekennzeichnet dadurch, dass** es ferner umfasst:

   Bestimmen (503) einer prozentualen Auslastung einer Bandbreite, die dem ersten Netzwerkpfad entspricht, über das erste Zeitintervall;
   basierend auf dem ersten Paketverlust über das erste Zeitintervall für den ersten Netzwerkpfad, Aktualisieren (507) eines gleitenden Mittelwerts des Paketverlusts für einen ersten Bucket mit Bandbreitenauslastung, der der prozentualen Bandbreitenauslastung des ersten Zeitintervalls entspricht;
   Auswählen (505) eines unteren Schwellenwerts des Paketverlusts, der für den ersten Bucket mit Bandbreitenauslastung definiert ist;
   Bestimmen (509) eines ersten oberen Schwellenwerts des Paketverlusts basierend, mindestens teilweise, auf dem aktualisierten gleitenden Mittelwert des Paketverlusts und dem definierten unteren Schwellenwert des Paketverlusts; und
   Bewerten (515) des ersten Netzwerkpfads basierend, mindestens teilweise, auf dem ersten Paketverlust über das erste Zeitintervall für den ersten Netzwerkpfad und dem ersten oberen Schwellenwert des Paketverlusts.

2. Verfahren nach Anspruch 1, wobei das Bewerten (515) des ersten Netzwerkpfads das Bestimmen einer Differenz zwischen dem ersten oberen Schwellenwert des Paketverlusts und dem ersten Paketverlust über das erste Zeitintervall für den ersten Netzwerkpfad und eines Quotienten aus der Differenz und dem ersten oberen Schwellenwert des Paketverlusts umfasst.

3. Verfahren nach Anspruch 1 oder 2, ferner umfassend das Aktualisieren einer Reihe von Bewertungen des ersten Netzwerkpfads über aufeinanderfolgende Zeitintervalle hinweg mit einer Angabe einer aktuellen Bewertung des Paketverlusts für den ersten Netzwerkpfad, wobei das Bewerten des ersten Netzwerkpfads die aktuelle Bewertung des Paketverlusts erzeugt und das erste Zeitintervall ein zuletzt verstrichenes Zeitintervall hinsichtlich der aufeinanderfolgenden Zeitintervalle ist, insbesondere wobei das Verfahren ferner ein grafisches Darstellen der Bewertungsreihe umfasst.

4. Verfahren nach einem der vorstehenden Ansprüche, wobei untere Schwellenwerte des Paketverlusts für eine Vielzahl von Buckets mit Bandbreitenauslastung definiert (505) werden, basierend auf Beobachtungen einer Vielzahl von Netzwerkpfaden, die eine gute Leistung aufweist, wie durch Paketverlust über eine Vielzahl von Bandbreitenauslastungen hinweg dargestellt wird, die der Vielzahl von Buckets mit Bandbreitenauslastung entsprechen, wobei die unteren Schwellenwerte des Paketverlusts den definierten unteren Schwellenwert des Paketverlusts einschließen, insbesondere wobei die Vielzahl von Netzwerkpfaden Schaltkreisen entspricht, die unterschiedliche Bandbreiten aufweisen.

5. Verfahren nach einem der vorstehenden Ansprüche, wobei der gleitende Mittelwert des Paketverlusts ein geglätteter oder gewichteter gleitender Mittelwert des Paketverlusts ist.

6. Verfahren nach einem der vorstehenden Ansprüche, ferner umfassend:
   Begrenzen (511) des ersten oberen Schwellenwerts des Paketverlusts auf einen zweiten oberen Schwellenwert des Paketverlusts, der für den ersten Bucket mit Bandbreitenauslastung definiert ist.

7. Verfahren nach einem der vorstehenden Ansprüche, ferner umfassend:

   Bestimmen des zweiten Paketverlusts über das erste Zeitintervall für den ersten Netzwerkpfad;
   Bestimmen einer prozentualen Auslastung einer zweiten Bandbreite des ersten Netzwerkpfads über das erste Zeitintervall;
   basierend auf dem zweiten Paketverlust über das erste Zeitintervall für den ersten Netzwerkpfad, Aktualisieren eines gleitenden Mittelwerts des Paketverlusts für einen zweiten Bucket mit Bandbreitenauslastung, der der prozentualen Auslastung der zweiten Bandbreite des ersten Netzwerkpfads entspricht;
   Auswählen eines zweiten unteren Schwellenwerts des Paketverlusts, der für den zweiten Bucket mit Bandbreitenauslastung definiert ist;

Bestimmen eines zweiten oberen Schwellenwerts des Paketverlusts, basierend, mindestens teilweise, auf dem aktualisierten gleitenden Mittelwert des Paketverlusts für den zweiten Bucket mit Bandbreitenauslastung und dem zweiten definierten unteren Schwellenwert des Paketverlusts; und

wobei das Bewerten des ersten Netzwerkpfads ebenso auf dem zweiten Paketverlust über das erste Zeitintervall für den ersten Netzwerkpfad und dem zweiten oberen Schwellenwert des Paketverlusts basiert, wobei der erste Paketverlust ein eingehender Paketverlust und der zweite Paketverlust ein ausgehender Paketverlust ist.

8. Nicht flüchtiges, maschinenlesbares Medium (607), das Programmcode aufweist, der darauf gespeichert ist, zum Erkennen von Netzwerkproblemen, **dadurch gekennzeichnet, dass** der Programmcode Anweisungen umfasst, die, wenn sie durch einen Prozessor (601) ausgeführt werden, den Prozessor (601) veranlassen zum:

für jeden einer Vielzahl von Buckets mit prozentualer Bandbreitenauslastung für einen Netzwerkpfad, Aufrechterhalten (507) eines gleitenden Mittelwerts des Paketverlusts basierend auf Zeitreihenpaketverlustdaten für die jeweilige prozentuale Bandbreitenauslastung des Netzwerkpfads; und

entsprechend jedem Ablauf eines Zeitintervalls, Bewerten (515) des Netzwerkpfads für das aktuelle Zeitintervall basierend, mindestens teilweise, auf dem Paketverlust für den Netzwerkpfad über das aktuelle Zeitintervall und einem ersten oberen Schwellenwert des Paketverlusts, wobei der erste obere Schwellenwert des Paketverlusts, mindestens teilweise, auf dem gleitenden Mittelwert des Paketverlusts für einen ersten der Vielzahl von Buckets mit prozentualer Bandbreitenauslastung, der der prozentualen Bandbreitenauslastung des Netzwerkpfads in dem aktuellen Zeitintervall entspricht, und einem unteren Schwellenwert des Paketverlusts basiert, der für den ersten Bucket mit prozentualer Bandbreitenauslastung definiert ist.

9. Maschinenlesbares Medium nach Anspruch 8, wobei das aktuelle Zeitintervall ein zuletzt verstrichenes Zeitintervall ist.

10. Maschinenlesbares Medium nach Anspruch 8 oder 9, wobei der Programmcode ferner Anweisungen umfasst, um den ersten oberen Schwellenwert des Paketverlusts auf einen zweiten oberen Schwellenwert des Paketverlusts zu begrenzen (511), der für den ersten Bucket mit prozentualer Bandbreitenauslastung definiert ist, wobei, vor dem Begrenzen, der erste obere Schwellenwert des Paketverlusts eine Summe (509) des gleitenden Mittelwerts des Paketverlusts und eines unteren Schwellenwerts des Paketverlusts ist, der für den ersten Bucket mit prozentualer Bandbreitenauslastung definiert ist, wobei die definierten Schwellenwerte des Paketverlusts aus Paketverlustbeobachtungen mehrerer Netzwerkpfade bei prozentualen Bandbreitenauslastungen innerhalb des ersten Bucket mit prozentualer Bandbreitenauslastung bestimmt (505) werden und wobei die mehreren Netzwerkpfade **gekennzeichnet sind, dass** sie eine gute Leistung hinsichtlich des Paketverlusts aufweisen.

11. Maschinenlesbares Medium nach einem der Ansprüche 8 bis 10, wobei die Anweisungen, um den Netzwerkpfad zu bewerten (515) des, Anweisungen umfassen, um die Bewertung als Funktion des Paketverlusts des aktuellen Zeitintervalls und des ersten oberen Schwellenwerts des Paketverlusts zu bestimmen.

12. Maschinenlesbares Medium nach einem der Ansprüche 8 bis 11, wobei der Programmcode ferner Anweisungen umfasst, um den aktualisierten gleitenden Mittelwert des Paketverlusts mit dem unteren Schwellenwert des Paketverlusts zu aggregieren (509), der für den ersten Bucket mit prozentualer Bandbreitenauslastung definiert ist, um den ersten oberen Schwellenwert des Paketverlusts zu bestimmen, insbesondere wobei der Paketverlust entweder ein eingehender oder ein ausgehender Paketverlust ist.

13. Einrichtung zum Erkennen von Netzwerkproblemen, umfassend:

einen Prozessor (601); und

ein computerlesbares Medium (607), **gekennzeichnet dadurch, dass** es Anweisungen darauf gespeichert aufweist, die durch den Prozessor (601) ausführbar sind, um die Einrichtung zu veranlassen zum, für jeden einer Vielzahl von Buckets mit prozentualer Bandbreitenauslastung, Aufrechterhalten (507) eines gleitenden Mittelwerts des Paketverlusts eines Netzwerkpfads basierend auf Zeitreihenpaketverlustdaten für den Netzwerkpfad, wobei die Anweisungen, um den gleitenden Mittelwert des Paketverlusts für jeden Bucket mit prozentualer Bandbreitenauslastung aufrechtzuerhalten, Anweisungen umfassen, um, bei Paketverlust des Netzwerkpfads über ein aktuelles Zeitintervall, den gleitenden Mittelwert des Paketverlusts des einen der Vielzahl von Buckets mit prozentualer Bandbreitenauslastung zu aktualisieren (507), der der prozentualen Bandbreitenauslastung des Netzwerkpfads für das aktuelle Zeitintervall entspricht; und

für das aktuelle Zeitintervall,

Bestimmen (515) eines Bereichs eines akzeptablen Paketverlusts für den Bucket mit prozentualer Bandbreitenauslastung, der der prozentualen Bandbreitenauslastung des Netzwerkpfads für das aktuelle Zeitintervall entspricht, wobei die Anweisungen, um den Bereich des akzeptablen Paketverlusts für den Bucket mit prozentualer Bandbreitenauslastung zu bestimmen (515), Anweisungen umfassen, um einen ersten oberen Schwellenwert des Paketverlusts zu bestimmen (509), der, mindestens teilweise, auf dem gleitenden Mittelwert des Paketverlusts für das aktuelle Zeitintervall und einem unteren Schwellenwert des Paketverlusts basiert, der für den Bucket mit prozentualer Bandbreitenauslastung definiert ist, der dem aktuellen Zeitintervall entspricht; und

Bewerten (515) des Netzwerkpfads, basierend, mindestens teilweise, auf dem Paketverlust für den Netzwerkpfad über dem aktuelle Zeitintervall und dem Bereich des akzeptablen Paketverlusts.

14. Einrichtung nach Anspruch 13, wobei für jeden der Vielzahl von Buckets mit prozentualer Bandbreitenauslastung ein unterer Schwellenwert des Paketverlusts definiert (505) wird, basierend, mindestens teilweise, auf den Beobachtungen der Vielzahl von Netzwerkpfaden mit verschiedenen Bandbreiten, und wobei sich die Beobachtungen über prozentuale Bandbreitenauslastungen hinweg ereignen.

15. Einrichtung nach Anspruch 13 oder 14, wobei die Anweisungen, um den Netzwerkpfad zu bewerten (515), Anweisungen umfassen, um eine eingehende Bewertung als Funktion des Paketverlusts über das aktuelle Zeitintervall und des akzeptablen Bereich von Paketverlusten zu bestimmen, und um eine eingehende Bewertung basierend auf eingehenden Paketverlustdaten über das aktuelle Zeitintervall zu bestimmen, wobei der Paketverlust ein eingehender Paketverlust ist,
und/oder

wobei die Anweisungen, um den ersten oberen Schwellenwert des Paketverlusts zu bestimmen (509), Anweisungen umfassen, um den gleitenden Mittelwert des Paketverlusts und den unteren Schwellenwert des Paketverlusts zu summieren (509) und um die Summe auf einen zweiten oberen Schwellenwert des Paketverlusts zu begrenzen (511), der für den Bucket mit prozentualer Bandbreitenauslastung definiert ist, der der prozentualen Bandbreitenauslastung des Netzwerkpfads für das aktuelle Zeitintervall entspricht,
und/oder
wobei das computerlesbare Medium (607) ferner Anweisungen umfasst, um eine Reihe von Bewertungen für den Netzwerkpfad mit der Bewertung für das aktuelle Zeitintervall zu aktualisieren.

## Revendications

1. Procédé permettant de détecter des problèmes de réseau comprenant :

la détermination (501) d'une première perte de paquets sur un premier intervalle de temps pour un premier chemin de réseau ;
**caractérisé par le fait qu'**il comprend en outre :

la détermination (503) d'un pourcentage d'utilisation d'une bande passante correspondant au premier chemin de réseau sur le premier intervalle de temps ;
sur la base de la première perte de paquets sur le premier intervalle de temps pour le premier chemin de réseau, la mise à jour (507) d'une moyenne mobile de perte de paquets pour un premier compartiment d'utilisation de bande passante qui correspond au pourcentage d'utilisation de bande passante du premier intervalle de temps ;
la sélection (505) d'un seuil inférieur de perte de paquets défini pour le premier compartiment d'utilisation de bande passante ;
la détermination (509) d'un premier seuil supérieur de perte de paquets sur la base, au moins en partie, de la moyenne mobile de perte de paquets mise à jour et du seuil inférieur de perte de paquets défini ; et
la notation (515) du premier chemin de réseau sur la base, au moins en partie, de la première perte de paquets sur le premier intervalle de temps pour le premier chemin de réseau et du premier seuil supérieur de perte de paquets.

2. Procédé selon la revendication 1, dans lequel la notation (515) du premier chemin de réseau comprend la détermination d'une différence entre le premier seuil supérieur de perte de paquets et la première perte de paquets sur le premier intervalle de temps pour le premier chemin de réseau et un quotient de la différence et du premier seuil

EP 4 156 633 B1

supérieur de perte de paquets.

3. Procédé selon la revendication 1 ou 2, comprenant en outre la mise à jour d'une série de scores du premier chemin de réseau sur l'ensemble d'intervalles de temps séquentiels avec une indication d'un score de perte de paquets actuel pour le premier chemin de réseau, dans lequel la notation du premier chemin de réseau génère le score de perte de paquets actuel et le premier intervalle de temps est un intervalle de temps écoulé le plus récent par rapport aux intervalles de temps séquentiels, en particulier dans lequel le procédé comprend en outre la présentation graphique de la série de scores.

4. Procédé selon l'une quelconque des revendications précédentes, dans lequel les seuils inférieurs de perte de paquets sont définis (505) pour une pluralité de compartiments d'utilisation de bande passante sur la base d'observations d'une pluralité de chemins de réseau présentant une bonne performance comme représentée par une perte de paquets sur l'ensemble d'une pluralité d'utilisations de bande passante correspondant à la pluralité de compartiments d'utilisation de bande passante, dans lequel les seuils inférieurs de perte de paquets comportent le seuil inférieur de perte de paquets défini, en particulier dans lequel la pluralité de chemins de réseau correspond à des circuits présentant des bandes passantes différentes.

5. Procédé selon l'une quelconque des revendications précédentes, dans lequel la moyenne mobile de perte de paquets est une moyenne mobile de perte de paquets lissée ou pondérée.

6. Procédé selon l'une quelconque des revendications précédentes, comprenant en outre :
le plafonnement (511) du premier seuil supérieur de perte de paquets à un second seuil supérieur de perte de paquets défini pour le premier compartiment d'utilisation de bande passante.

7. Procédé selon l'une quelconque des revendications précédentes, comprenant en outre :

la détermination de la seconde perte de paquets sur le premier intervalle de temps pour le premier chemin de réseau ;
la détermination d'un pourcentage d'utilisation d'une seconde bande passante du premier chemin de réseau sur le premier intervalle de temps ;
sur la base de la seconde perte de paquets sur le premier intervalle de temps pour le premier chemin de réseau, la mise à jour d'une moyenne mobile de perte de paquets pour un second compartiment d'utilisation de bande passante qui correspond au pourcentage d'utilisation de la seconde bande passante du premier chemin de réseau ;
la sélection d'un second seuil inférieur de perte de paquets défini pour le second compartiment d'utilisation de bande passante ;
la détermination d'un second seuil supérieur de perte de paquets sur la base, au moins en partie, de la moyenne mobile de perte de paquets mise à jour pour le second compartiment d'utilisation de bande passante et le second seuil inférieur de perte de paquets défini ; et
dans lequel la notation du premier chemin de réseau est également basée sur la seconde perte de paquets sur le premier intervalle de temps pour le premier chemin de réseau et le second seuil supérieur de perte de paquets, dans lequel la première perte de paquets est une perte de paquets d'entrée et la seconde perte de paquets est une perte de paquets de sortie.

8. Support non transitoire lisible par machine (607) sur lequel est stocké un code de programme, destiné à détecter des problèmes de réseau, **caractérisé en ce que** le code de programme comprend des instructions qui, lorsqu'elles sont exécutées par un processeur (601), amènent le processeur (601) à :

pour chacun d'une pluralité de compartiments de pourcentage d'utilisation de bande passante pour un chemin de réseau, maintenir (507) une moyenne mobile de perte de paquets sur la base de données de perte de paquets en série temporelle pour un pourcentage respectif d'utilisation de bande passante du chemin de réseau ; et
correspondant à chaque intervalle de temps, noter (515) le chemin de réseau pour l'intervalle de temps actuel sur la base, au moins en partie, de la perte de paquets sur l'intervalle de temps actuel et d'un premier seuil supérieur de perte de paquets, dans lequel le premier seuil supérieur de perte de paquets est basé, au moins en partie, sur la moyenne mobile de perte de paquets pour un premier de la pluralité de compartiments de pourcentage d'utilisation de bande passante qui correspond au pourcentage d'utilisation de bande passante du chemin de réseau dans l'intervalle de temps actuel et un seuil inférieur de perte de paquets défini pour le premier compartiment de pourcentage d'utilisation de bande passante.

9.  Support lisible par machine selon la revendication 8, dans lequel l'intervalle de temps actuel est un intervalle de temps écoulé le plus récent.

10. Support lisible par machine selon la revendication 8 ou 9, dans lequel le code de programme comprend en outre des instructions pour plafonner (511) le premier seuil supérieur de perte de paquets à un second seuil supérieur de perte de paquets qui est défini pour le premier compartiment de pourcentage d'utilisation de bande passante, dans lequel avant de plafonner, le premier seuil supérieur de perte de paquets est une somme (509) de la moyenne mobile de perte de paquets et d'un seuil inférieur de perte de paquets défini pour le premier compartiment de pourcentage d'utilisation de bande passante, dans lequel les seuils de perte de paquets définis sont déterminés (505) à partir d'observations de perte de paquets de chemins de réseau multiples à des pourcentages d'utilisation de bande passante dans le premier compartiment de pourcentage d'utilisation de bande passante et dans lequel les chemins de réseau multiples sont caractérisés comme présentant de bonnes performances en termes de perte de paquets.

11. Support lisible par machine selon l'une quelconque des revendications 8 à 10, dans lequel les instructions pour noter (515) le chemin de réseau comprennent des instructions pour déterminer le score en fonction de la perte de paquets de l'intervalle de temps actuel et du premier seuil supérieur de perte de paquets.

12. Support lisible par machine selon l'une quelconque des revendications 8 à 11, dans lequel le code de programme comprend en outre des instructions pour regrouper (509) la moyenne mobile de perte de paquets mise à jour avec le seuil inférieur de perte de paquets défini pour le premier compartiment de pourcentage d'utilisation de bande passante afin de déterminer le premier seuil supérieur de perte de paquets, en particulier dans lequel la perte de paquets est soit une perte de paquets d'entrée, soit une perte de paquets de sortie.

13. Appareil permettant de détecter des problèmes de réseau comprenant :

    un processeur (601) ; et
    un support lisible par ordinateur (607) **caractérisé par le fait qu'**il présente des instructions stockées sur celui-ci qui sont exécutables par le processeur (601) pour amener l'appareil à,
    pour chacun d'une pluralité de compartiments de pourcentage d'utilisation de bande passante, maintenir (507) une moyenne mobile de perte de paquets d'un chemin de réseau sur la base de données de perte de paquets en série temporelle pour le chemin de réseau, dans lequel les instructions pour maintenir la moyenne mobile de perte de paquets pour chaque compartiment de pourcentage d'utilisation de bande passante comprennent des instructions pour mettre à jour (507), avec la perte de paquets du chemin de réseau sur un intervalle de temps actuel, la moyenne mobile de perte de paquets parmi l'un de la pluralité de compartiments de pourcentage d'utilisation de bande passante qui correspond au pourcentage d'utilisation de bande passante du chemin de réseau pour l'intervalle de temps actuel ; et
    pour l'intervalle de temps actuel,
    déterminer (515) une plage de perte de paquets acceptable pour le compartiment de pourcentage d'utilisation de bande passante qui correspond au pourcentage d'utilisation de bande passante du chemin de réseau pour l'intervalle de temps actuel, dans lequel les instructions pour déterminer (515) la plage de perte de paquets acceptable pour le compartiment de pourcentage d'utilisation de bande passante comprennent des instructions pour déterminer (509) un premier seuil supérieur de perte de paquets qui est basé, au moins en partie, sur la moyenne mobile de perte de paquets pour l'intervalle de temps actuel et un seuil inférieur de perte de paquets défini pour le compartiment de pourcentage d'utilisation de bande passante qui correspond à l'intervalle de temps actuel ; et
    noter (515) le chemin de réseau sur la base, au moins en partie, de la perte de paquets pour le chemin de réseau sur l'intervalle de temps actuel et de la plage de perte de paquets acceptable.

14. Appareil selon la revendication 13, dans lequel un seuil inférieur de perte de paquets est défini (505) pour chacun de la pluralité de compartiments de pourcentage d'utilisation de bande passante sur la base, au moins en partie, des observations de la pluralité de chemins de réseau avec diverses bandes passantes et dans lequel les observations portent sur un pourcentage d'utilisations de bande passante.

15. Appareil selon la revendication 13 ou 14, dans lequel les instructions pour noter (515) le chemin de réseau comprennent des instructions pour déterminer un score d'entrée en fonction de la perte de paquets sur l'intervalle de temps actuel et la plage de perte de paquets acceptable et pour déterminer un score de sortie sur la base de données de perte de paquets de sortie sur l'intervalle de temps actuel, dans lequel la perte de paquets est une perte de paquets d'entrée,

et/ou

dans lequel les instructions pour déterminer (509) le premier seuil supérieur de perte de paquets comprennent des instructions pour additionner (509) la moyenne mobile de perte de paquets et le seuil inférieur de perte de paquets et pour plafonner (511) la somme à un second seuil supérieur de perte de paquets défini pour le pourcentage d'utilisation de bande passante qui correspond au pourcentage d'utilisation de bande passante du chemin de réseau pour l'intervalle de temps actuel,
et/ou
dans lequel le support lisible par ordinateur (607) comprend en outre des instructions pour mettre à jour une série de scores pour le chemin de réseau avec le score pour l'intervalle de temps actuel.

FIG. 1

EP 4 156 633 B1

| Load Bucket (%) | LowerThreshold (Loss %) | Upper Threshold (Packet Loss %) |
|---|---|---|
| 0 | 0.23 | 0.46 |
| 1 | 0.23 | 0.46 |
| 2 | 0.26 | 0.52 |
| 3 | 0.28 | 0.56 |
| 4 | 0.31 | 0.62 |
| 5 | 0.34 | 0.68 |
| 6 | 0.37 | 0.74 |
| 7 | 0.4 | 0.8 |
| 8 | 0.42 | 0.84 |
| 9 | 0.45 | 0.9 |
| 10 | 0.48 | 0.96 |
| 12 | 0.54 | 1.08 |
| 14 | 0.59 | 1.18 |
| 16 | 0.65 | 1.3 |
| 18 | 0.7 | 1.4 |
| 20 | 0.76 | 1.52 |
| 25 | 0.9 | 1.8 |
| 30 | 1.04 | 2.08 |
| 35 | 1.18 | 2.36 |
| 40 | 1.32 | 2.64 |
| 45 | 1.46 | 2.92 |
| 50 | 1.6 | 3.2 |
| 60 | 1.88 | 3.76 |
| 70 | 2.16 | 4.32 |
| 80 | 2.44 | 4.88 |
| 90 | 2.72 | 5.44 |
| 100 | 3 | 6 |

231

FIG. 2

(TUNNEL A, 200.0, 20.0)

FIG. 3

(TUNNEL B, 95.0, 95.0)

ingress_packet_loss_health_score
smoothed_ingress_packet_loss_health_score

packet loss health score

Time (1 minute)

8/08 8/09 8/10 8/11 8/12 8/13

401

FIG. 4

DETERMINE NEARLY REAL-TIME PACKET LOSS SCORE FOR NETWORK PATH

501 — DETECT PACKET LOSS OVER CURRENT TIME INTERVAL OF A NETWORK PATH (PATH)

503 — FOR CURRENT TIME INTERVAL, DETERMINE PERCENT UTILIZATION OF BANDWIDTH OF CIRCUIT ("LOAD") ASSOCIATED WITH THE PATH

505 — SELECT PACKET LOSS LOWER THRESHOLD DEFINED FOR THE LOAD

507 — UPDATE PACKET LOSS MOVING AVERAGE AT THE LOAD BASED ON PACKET LOSS OF THE CURRENT TIME INTERVAL

509 — COMPUTE SUM OF UPDATED PACKET LOSS MOVING AVERAGE AND DEFINED PACKET LOSS LOWER THRESHOLD

510 — DOES THE SUM EXCEED A PACKET LOSS UPPER THRESHOLD DEFINED FOR THE LOAD?

YES

511 — SET DYNAMIC PACKET LOSS UPPER THRESHOLD AS PACKET LOSS UPPER THRESHOLD

NO

513 — SET DYNAMIC PACKET LOSS UPPER THRESHOLD AS THE SUM

515 — COMPUTE NEARLY REAL-TIME (NRT) PACKET LOSS SCORE FOR PATH AS A FUNCTION OF CURRENT PACKET LOSS AND DYNAMIC PACKET LOSS UPPER THRESHOLD

517 — COMMUNICATE NRT SCORE FOR CURRENT TIME INTERVAL

FIG. 5

605

601

Processor
Unit

Network
Interface

Bus

607

Memory

Nearly-Real Time Packet
Loss Based Network Path
Score Calculator

611

603

FIG. 6

**REFERENCES CITED IN THE DESCRIPTION**

**Patent documents cited in the description**

• EP 1811683 A2